# EUROPÄISCHE PATENTSCHRIFT

(11) **EP 1 625 359 B1**
(45) Veröffentlichungstag und Bekanntmachung des Hinweises auf die Patenterteilung: **06.01.2010**
(21) Anmeldenummer: 04732302.7
(22) Anmeldetag: 12.05.2004
(51) Int. Cl.: G01D 5/347, G02B 21/00

(54) **EINSTELLBARES PINHOLE, INSBESONDERE FÜR EIN LASER-SCANNING-MIKROSKOP**
ADJUSTABLE PINHOLE IN PARTICULAR FOR A LASER-SCANNING MICROSCOPE
STENOPE REGLABLE, EN PARTICULIER POUR UN MICROSCOPE A BALAYAGE LASER

(30) Priorität: 22.05.2003 DE 10323921
(43) Veröffentlichungstag der Anmeldung: 15.02.2006
(73) Patentinhaber: CARL ZEISS JENA GmbH, 07745 Jena (DE)
(72) Erfinder: BARTZKE, Karlheinz, 99867 Gotha (DE); WOLLESCHENSKY, Ralf, 99510 Apolda (DE)
(86) Internationale Anmeldenummer: PCT/EP2004/005063
(87) Internationale Veröffentlichungsnummer: WO 2004/104522

(56) Entgegenhaltungen:
- EP-A- 0 381 918
- WO-A-01/18492
- WO-A-97/40345
- US-A- 2 948 890
- US-A- 6 167 173
- US-B1- 6 285 019

## Beschreibung

Für die erzielbare optische Auflösung eines Laser-Scanning-Mikroskopes ist eine reproduzierbar einstellbare Pinholelage und Pinholegröße von besonderer Bedeutung.

Wesentlich für eine störungsfreie Fertigstellung der Laserscanmikroskope ist jedoch die Montage funktionsfähiger Baugruppen, also auch der Pinholebaugruppe. Dies setzt voraus, daß auch die Reproduzierbarkeit der Einstellwerte Pinholeöffnung und Pinholelage in einem Bereich von etwa 0,3µm vor der Montage geprüft werden kann. Deshalb sind in der Pinholebaugruppe Wegmeßsysteme erforderlich, die die reproduzierbare Einstellung der Pinholeöffnung und Pinholelage auf 0,3µm gestatten.

Inkrementale Wegmeßsysteme gestatten bei einer Meßlänge von 1 mm eine Reproduzierbarkeit <0,3µm (<0,03%). Analoge Meßsysteme weisen im allgemeinen Reproduzierbarkeitsfehler von >1% auf und nur aufwendige Präzisionsysteme erzielen Reproduzierbarkeitsfehler <0,1%.

In herkömmlichen inkrementalen Wegmeßsystemen wird das Raster des Maßstabes durch ein Abtastgitter abgetastet. Das Abtastgitter besteht im allgemeinen aus 4 Gittergruppen, die zueinander Phasenverschiebungen von 90, 180, 270 und 360° aufweisen. Hierdurch ist eine Kompensation des Gleichsignals der Optoempfänger und durch eine besondere Signalauswertung die Vor-Rückwärtserkennung der Meßbewegung möglich.

Um die Wirkung von Teilungsfehler zu verringern und hohe Signalpegel zu erzielen, erfolgt in herkömmlichen Wegmeßsystemen die Abtastung des Rasters nicht mit einem einzigen Spalt, sondern mit einer möglichst großen Strichgruppe. Auf die Nulldurchgänge des bei der Abtastung entstehenden Wechselsignals wird getriggert und zwischen den Nulldurchgängen hochgradig interpoliert, um Auflösungen von <0,3µm erzielen zu können.

Zwischen Abtastgitter und Rastermaßstab wird zur Vermeidung von Reibung ein Luftspalt von z. B. 1 mm gelassen. Hierdurch verringert sich jedoch die Intensität des Meßsignales entscheidend, weil zwischen Rastermaßstab und Abtastgitter Beugungsverluste auftreten, die in den Talbotschen Ebenen sogar zur Signalauslöschung führen. Das Abtastgitter muß deshalb präzise zum Rastermaßstab geführt werden, was mit erheblichen konstruktiven Aufwendungen verbunden ist.

Herkömmliche inkrementale Wegmeßsysteme weisen auf dem Rastermaßstab gesonderte Rastergruppen und einen zusätzlichen optisch-elektronischen Kanal für die Referenzierung auf.

Der Aufwand und die Größe herkömmlicher inkrementaler Meßsysteme entstehen durch die Verarbeitung relativ kleiner Meßsignale infolge der Beugungsverluste, durch die Interpolation, die Vor-Rückwärtserkennung, die Referenzierung und die präzise Führung des Abtastgitters.

Herkömmliche inkrementale Wegmeßsysteme sind zu groß und zu teuer für Anwendungen in der Pinholebaugruppe. So weisen deren Meßköpfe Abmessungen von etwa 20mm auf und ihr Preis liegt bei 200€. Für die Pinholebaugruppe sind jedoch nur Abmessungen von 5mm und Preise von 20€ akzeptabel.

Für das Pinhole wird daher ein miniaturisiertes und kostengünstiges inkrementales Wegmeßsystem benötigt, das die reproduzierbare Einstellung der Pinholeöffnung und Pinholelage auf <0,3µm gestattet und dennoch einfach und kostengünstig ist.

Die Druckschrift JP 2001 209 965 offenbart ein System zur reproduzierbaren Einstellung der Pinhole Lage.

Die Lösungsidee besteht darin, die den Aufwand und die Größe inkrementaler Meßsysteme verursachenden Bedingungen, wie Abstand zwischen Rastermaßstab und Abtastgitter und gesonderter optisch-elektronischer Referenzierungskanal, durch neue Lösungsansätze zu eliminieren.

Dies wird erzielt durch:
- Gleiten des Abtastgitters auf dem Maßstab, getrennt durch eine Teflongleitkuve
- Einzelstrichabtastung in nur einem optisch-elektronischen Kanal durch einen Gabelkoppler
- Referenzierung im einzigen optisch-elektronischen Kanal an den Rändern des Rasters
- Interpolation zwischen den Weginkrementen des Meßsystems durch den vorhandenen Schrittmotor
- Vor-Rückwärtserkennung durch die Motorsteuerung und nicht durch das Meßsystem.

Folgende Vorteile sind durch die Lösung erzielbar:
- erhebliche Zunahme des Meßsignals (geometrische Optik statt Beugung)
- nur ein optisch-elektronischer Kanal
- erhebliche Verringerung der Baugröße
- erhebliche Verringerung der Herstellkosten

Als ( theoretische) Nachteile ergeben sich:
- motorische Interpolation ist ungenauer als eine elektronische
- Gleichsignalschwankungen können nicht einfach eliminiert werden
- Einzelstrichabtastung bewirkt kleinere Meßsignale als Strichgruppenabtastung

Die Nachteile werden dadurch ausgeglichen, daß die motorische Interpolation über Differenzgewindespindeln mit hoher Wegauflösung erfolgt, mit stabilisierter Versorgungsspannung gearbeitet wird und trotz Einzelstrichabtastung große Meßsignale wegen des Kontaktes von Rastermaßstab und Abtastgitter erzielt werden.

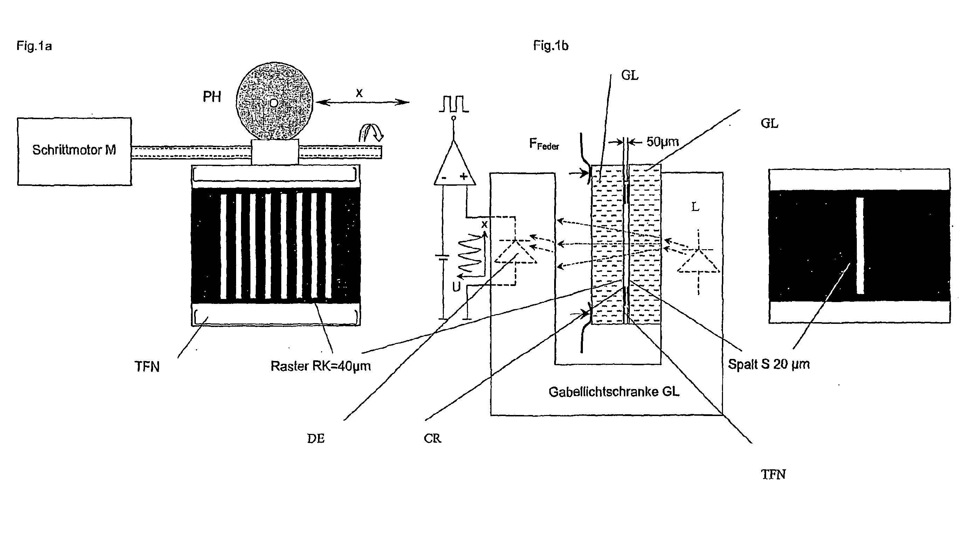

### 1. Erfindungsgemäßes Ausführungsbeispiel (s. Fig.1a und b)

In einer Gabellichtschranke GL mit Lichtquelle L und gegenüberliegendem Detektor DE ist ein Spalt S angeordnet, der ein linienförmiges Lichtbündel erzeugt.
Von einem Schrittmotor M wird das Raster RK , verbunden mit dem Pinhole über eine Spindel am Spalt S vorbeigeführt. Spalt S und Raster RK liegen, lediglich durch eine 50 µm dicke Teflongleitkurve TFN getrennt, federnd (durch Feder F) aufeinander. Spalt und Raster werden durch Beschichtung von Glasplatten GL mit Chrom CR realisiert.
In Fig.1b, rechter Teil der Zeichnung ist ein schematischer Schnitt durch Fig.1a an einer Stelle, wo das Raster lichtdurchlässig ist, dargestellt.
Das linienförmige Lichtbündel wird vom Raster periodisch abgetastet. Die Gabellichtschranke GL gibt ein sinusförmiges elektrisches Signal ab, das um den Gleichanteil verschoben ist. Das sinusförmige elektrische Signal wird getriggert und liefert die Weginkremente bei der Verschiebung des Rasters. Zwischen den Weginkrementen kann über den hochauflösenden Schrittmotorantrieb (Mikroschrittauflösung bei Differenzgewinde z. B. 0,1µm) interpoliert werden.

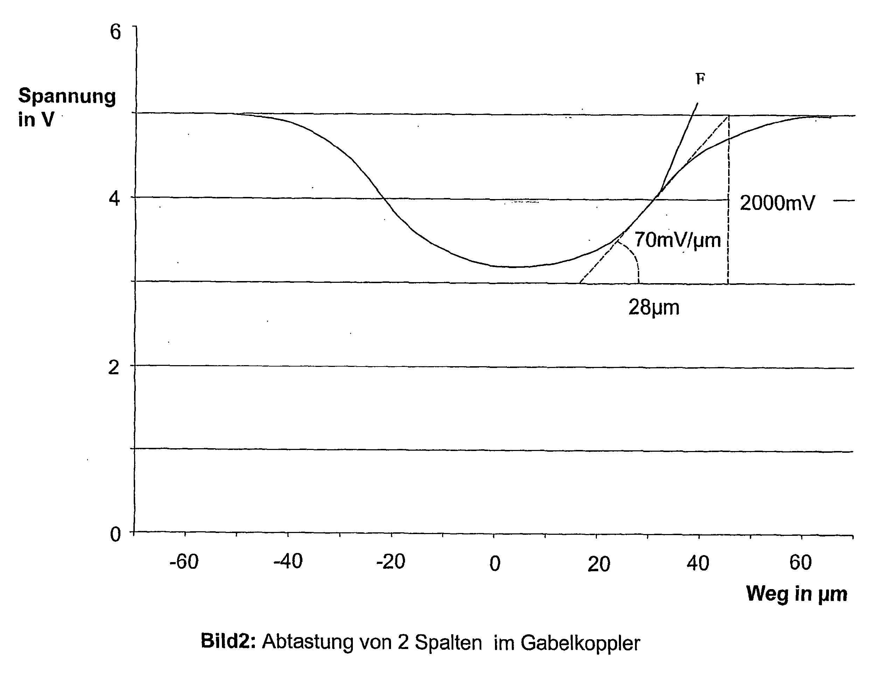

Der Spalt ist in der Gabellichtschranke vor der LED fest angeordnet. Das Raster gleitet federnd über Teflongleitkurven TFN am Spalt S entlang. Eine Empfängerdiode DE in der Gabellichtschranke GL detektiert die Hell-Dunkelübergänge durch Einzelstrichabtastung. Auf die Flanken F des Spannungssignals der Gabellichtschranke ( siehe Fig.2) wird getriggert. Die Triggerpunkte bilden die Inkremente des Wegmeßsystems, zwischen denen mittels Schrittmotor interpoliert wird. Die Referenzierung des Wegmeßsystems erfolgt an den Rändern des Rasters. Vorteilhaft gelingt es also die Vorzüge des Rastersystems mit der Genauigkeit von Schrittmotorantrieben über kürzere Distanzen zu vereinen,
indem die deutlichen Signaländerungen bei Erreichen oder Verlassen eines Rasterstriches als Bezugspunkte dienen, von denen aus die Schrittmotorsteuerung hochgenau und reproduzierbar ( Abspeicherung des Flankenwertes und der Schrittzahl) interpoliert und dadurch die eingestellte Pinholelage hochgenau wieder eingestellt werden kann ( z.B. bei Wechsel von optischen Elementen wie dichroitischen Strahlteilern.
Für die Pinholeverschiebung in zwei Richtungen sowie für die Pinholeöffnung selbst sind bis zu drei oder vier beschriebene Antriebe und Meßsysteme übereinander stapelartig vorgesehen.

## Patentansprüche

1. Bezüglich seiner Lage oder Größe einstellbares Pinhole, wobei zur Einstellung der Lage oder Größe ein Schrittmotor, ein inkrementelles Wegmesssystem, das zur Erzeugung von Weginkrementen eine Lichtschranke mit einem Spalt zum Lichtdurchgang zur Einzelstrichabtastung in nur einem optisch- elektronischen kanal durch einen Gablehoppler und ein mit dem Schrittmotor verbundenes und zum Spalt bewegliches Linienraster das auf dem Spalt abgleitbar ist, aufweist, und eine Schrittmotorsteuerung vorgesehen sind, wobei die Schrittmotorsteuerung zwischen den Weginkrementen des Wegmesssystems mittels des Schrittmotors interpoliert.

2. Pinhole nach Anspruch 1, wobei Spalt und Linienraster federnd aufeinander gedrückt und zueinander auf Teflonbahnen abgleitbar sind.

3. Laser-Scanning-Mikroskop mit einem Pinhole nach einem der vorhergehenden Ansprüche.

4. Verfahren zur Einstellung der Lage oder Größe eines Pinholes, **dadurch gekennzeichnet, dass** zur Einstellung der Lage oder Größe ein Schrittmotor und ein inkrementelles Wegmeßsystem, das mittels einer Lichtschranke mit einem Spalt zum Lichtdurchgang zur Einzelstrichabtastung in nur einem optisch- elektronischen kanal durch einen Gablehoppler und eines mit dem Schrittmotor verbundenen und zum Spalt beweglichen Linienrasters das auf dem Spalt abgleitbar ist, Weginkremente erzeugt, verwendet werden, wobei zwischen den Weginkrementen des Wegmesssystems mittels des Schrittmotors interpoliert wird.

5. Verfahren zur Einstellung der Lage oder Größe eines Pinholes nach Anspruch 4, wobei die Signaländerung bei Erreichen oder Verlassen eines Rasterstriches als Bezugspunkt für die Interpolation mittels des Schrittmotors dient.

## Claims

1. Pinhole which can be adjusted in position or size, in which there are provided for adjusting the position or size a stepping motor, an incremental position measuring system which has for the purpose of producing path increments a light barrier with a slit ; for the passage of light for single-line sampling in only one optoelectronic channel by a forked light barrier, and a line pattern which is connected to the stepping motor, can move relative to the slit and can slide off on the slit, and a stepping motor controller, the stepping motor controller interpolating between the path increments of the position measuring system by means of the stepping motor.

2. Pinhole according to Claim 1, in which slit and line pattern are pressed resiliently onto one another and can slide off towards one another on Teflon tracks.

3. Laser scanning microscope having a pinhole according to one of the preceding claims.

4. Method for adjusting the position or size of a pinhole, **characterized in that** use is made for adjusting the position or size of a stepping motor and an incremental position measuring system which produces path increments by means of a light barrier with a slit for the passage of light for single-line sampling in only one optoelectronic channel by a forked light barrier, and a line pattern which is connected to the stepping motor, can move relative to the slit and can slide off on the slit, interpolation being performed between the path increments of the position measuring system by means of the stepping motor.

5. Method for adjusting the position or size of a pinhole according to Claim 4, in which the change in signal when a pattern line is reached or departed from serves as reference point for interpolation by means of the stepping motor.

## Revendications

1. Sténopé réglable en position ou en dimension dans lequel le réglage de la position ou de la dimension sont prévus au moyen d'un moteur pas à pas, d'un système de mesure incrémental du déplacement comportant une cellule photoélectrique avec une fente pour le passage de la lumière destinée à générer des incréments du déplacement, pour le balayage selon des pistes individuelles dans un seul canal optoélectronique au moyen d'un coupleur en Y, et un balayage par lignes relié au moteur pas à pas et mobile par rapport à la fente en pouvant glisser sur la fente, et une commande de moteur pas à pas, la commande de moteur pas à pas assurant une interpolation entre les incréments de déplacement du système de mesure du déplacement au moyen du moteur pas à pas.

2. Sténopé selon la revendication 1, dans lequel la fente et le balayage par lignes sont appliqués l'un sur l'autre de manière élastique et peuvent glisser l'un par rapport à l'autre sur des pistes de Teflon.

3. Microscope à balayage laser avec un sténopé selon une des revendications précédentes.

4. Procédé pour le réglage de la position ou de la dimension d'un sténopé, **caractérisé en ce que** pour régler la position ou la dimension, on utilise un moteur pas à pas et un système de mesure incrémental du déplacement utilisant une cellule photoélectrique avec une fente pour le passage de la lumière pour le balayage selon des pistes individuelles dans un seul canal optoélectronique au moyen d'un coupleur en Y, et un balayage par lignes relié au moteur pas à pas et mobile par rapport à la fente en pouvant glisser sur la fente pour générer les incréments du déplacement, et une commande de moteur pas à pas, le moteur pas à pas assurant une interpolation entre les incréments de déplacement du système de mesure du déplacement.

5. Procédé pour le réglage de la position ou de la dimension d'un sténopé selon la revendication 4, la modification du signal lorsqu'on atteint ou qu'on quitte une ligne de balayage servant de point de référence à l'interpolation au moyen du moteur pas à pas.
